# EUROPÄISCHE PATENTSCHRIFT

(11) **EP 4 224 218 B1**
(45) Veröffentlichungstag und Bekanntmachung des Hinweises auf die Patenterteilung: **10.07.2024**
(21) Anmeldenummer: 22190676.1
(22) Anmeldetag: 17.08.2022
(51) Int. Cl.: G01V 8/20, G01V 8/22

(54) **LICHTSCHRANKENANORDNUNG**
LIGHT BARRIER DEVICE
ENSEMBLE BARRIÈRE LUMINEUSE

(30) Priorität: 02.02.2022 DE 202022100571 U
(43) Veröffentlichungstag der Anmeldung: 09.08.2023
(73) Patentinhaber: Leuze electronic GmbH + Co. KG, 73277 Owen/Teck (DE)
(72) Erfinder: Feller, Bernhard, 86316 Friedberg (DE)
(74) Vertreter: Ruckh, Rainer Gerhard

(56) Entgegenhaltungen:
- CN-A- 105 259 588
- DE-U1- 202008 014 137
- FR-A1- 2 504 709
- US-A- 5 060 309
- US-A- 5 298 738
- US-A1- 2004 031 937

## Beschreibung

Die Erfindung betrifft eine Lichtschrankenanordnung.

Derartige Lichtschrankenanordnungen werden generell zur Erfassung von Objekten in einem Überwachungsbereich eingesetzt.

In der einfachsten Ausführungsform weist die Lichtschrankenanordnung nur einen Lichtstrahlen emittierenden Sender und einen Lichtstrahlen empfangenden Empfänger auf. Die Lichtschrankenanordnung bildet dann eine Lichtschranke aus, deren Sender und Empfänger eine einzelne Strahlachse bildet.

Generell kann die Lichtschrankenanordnung auch mehrere Sender und Empfänger aufweisen, wobei dann jedem Sender ein Empfänger zur Ausbildung einer Strahlachse zugeordnet ist. Ein Beispiel für einen derartigen optischen Sensor ist ein Lichtvorhang.

Der Lichtvorhang umfasst typischerweise in einem ersten Gehäuse an einem Rand des Überwachungsbereichs eine Reihenanordnung von Lichtstrahlen emittierenden Sendern und in einem zweiten Gehäuse an dem gegenüberliegenden Rand des Überwachungsbereichs eine Reihenanordnung von Lichtstrahlen empfangenden Empfängern.

Der optische Sensor weist als Elektronikkomponente eine Auswerteeinheit auf, in welcher in Abhängigkeit von Empfangssignalen des oder der Empfänger ein Objektfeststellungssignal generiert wird. Dieses Objektfeststellungssignal kann insbesondere als binäres Schaltsignale ausgebildet sein, dessen Schaltzustände angeben, ob sich ein Objekt im Überwachungsbereich befindet oder nicht.

Um eine sichere Objektdetektion zu gewährleisten, ist eine möglichst hohe Störfestigkeit der Lichtschrankenanordnung gegen Störlichteinstrahlungen erforderlich. Derartige Störlichteinstrahlungen können insbesondere durch benachbarte Lichtschrankenanordnungen verursacht sein deren Lichtstrahlen, beispielsweise durch Reflexion an spiegelnd reflektierenden Gegenständen in Empfänger der Lichtschrankenanordnung eingestrahlt werden und dann gegebenenfalls einen freien Überwachungsbereich vortäuschen, obwohl ein Objekt im Überwachungsbereich vorhanden ist.

Prinzipiell ist es bekannt, dass die Lichtstrahlen unterschiedlicher Sender von Lichtschrankenanordnungen unterschiedliche Pulsfolgen von Lichtimpulsen emittieren, wobei anhand der empfangenen Pulsfolgen ermittelt wird, ob die entsprechenden Lichtstrahlen, die an einem Empfänger der Lichtschrankenanordnung registriert werden, von zugeordneten Sendern stammen oder nicht.

Die DE 20 2008 014 137 U1 betrifft einen Lichtvorhang zur Erfassung von Objekten in einem Überwachungsbereich mit einer eine Anzahl von Lichtstrahlen emittierenden Sendern aufweisenden Sendereinheit und mit einer eine Anzahl von Lichtstrahlen empfangenden Empfängern aufweisenden Empfängereinheit, wobei jeweils ein Sender und ein Empfänger eine Strahlachse derart bilden, dass bei freiem Überwachungsbereich die Lichtstrahlen des Senders einer Strahlachse auf den Empfänger der jeweiligen Strahlachse geführt sind. Die Empfängereinheit weist einen Synchrondemodulator auf, auf welchen die Empfangssignale der Empfänger geführt sind, und dass die Ausgangssignale des Synchrondemodulators einer Auswerteeinheit zur Generierung eines Objektfeststellungssignals zugeführt sind.

Die US 2004/0031937 A1 betrifft einen Reflexionsmessungen durchführenden optischen Sensor, insbesondere einen Scanner. Zur Signalauswertung wird ein Decoder eingesetzt, der insbesondere ein PLL-Schaltkreis ist.

Die FR 2 504 709 A1 betrifft eine Lichtschranke, bei der zur Rekonstruktion von Nutzsignalen eine PLL-Einheit eingesetzt wird.

Die CN 105 259 588 A betrifft einen Lichtvorhang, bei dem zur Signalsynchronisierung eine digitale PLL-Einheit und ein Rahmen-Synchronisationsmodul vorgesehen sind.

Die US 5 298 738 A betrifft ein optisches Mehrstrahlsystem für Verkehrsüberwachungen.

Die US 5 060 309 A betrifft einen optischen Sensor mit einem moduliertes Licht aussendenden Sender. Die Modulation wird empfangsseitig mittels einer PLL-Einheit erfasst.

Der Erfindung liegt die Aufgabe zugrunde eine Lichtschrankenanordnung mit hoher Funktionssicherheit bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Lichtschrankenanordnung zur Erfassung von Objekten in einem Überwachungsbereich mit wenigstens einem Lichtstrahlen emittierenden Sender und einem zugeordneten Empfänger der mit dem Sender eine Strahlachse bildet. Bei freiem Überwachungsbereich sind die Lichtstrahlen auf den Empfänger geführt. Bei einem Objekteingriff im Überwachungsbereich ist der Strahlengang der Lichtstrahlen zumindest teilweise unterbrochen. Mit einer Auswerteeinheit, wird abhängig von Empfangssignalen des Empfängers ein Objektfeststellungssignal generiert. Den Lichtstrahlen ist eine Codierung in Form einer Sendemodulation zum Beispiel in Form einer Helligkeitsmodulation aufgeprägt. Die Auswerteeinheit weist eine digitale PLL auf, in welcher die Codierung der Lichtstrahlen ermittelt wird. Die Lichtstrahlen weisen mehrere von einem Sender und einem Empfänger gebildete Strahlachsen auf, wobei den Lichtstrahlen aller Strahlachsen eine Codierung in Form einer Sendemodulation aufgeprägt ist. Die Codierungen der Lichtstrahlen werden in wenigstens einer PLL ermittelt. In dem oder jedem digitalen Prozessor sind mehrere PLL vorgesehen, die Gruppen von Lichtstrahlen zugeordnet sind. In dem oder jedem digitalen Prozessor ist eine Anzahl der Strahlachsen entsprechende Anzahl von PLL vorgesehen, wobei den Lichtstrahlen einer Strahlachse jeweils eine PLL zugeordnet ist.

Die erfindungsgemäße Lichtschrankenanordnung arbeitet generell nach dem Lichtschrankenprinzip. Der wenigstens eine Sender der Lichtschrankenanordnung ist an einem Rand des Überwachungsbereichs, der dem Sender zugeordnete wenigstens eine Empfänger am gegenüberliegenden Rand des Überwachungsbereichs angeordnet.

Liegt ein freier Überwachungsbereich vor, gelangen die Lichtstrahlen des Senders ungehindert zum Empfänger. Bei einem Objekteingriff im Überwachungsbereich wird der Strahlengang der Lichtstrahlen zumindest teilweise unterbrochen, so dass am Empfänger gegenüber dem Fall eines freien Überwachungsbereichs eine reduzierte Lichtmenge reduziert wird. Die entsprechenden Empfangssignale werden in der Auswerteeinheit zur Generierung eines Objektfeststellungssignals genutzt. Das Objektfeststellungssignal ist insbesondere ein binäres Schaltsignal, dessen Schaltzustände angeben, ob ein Objekt im Überwachungsbereich vorhanden ist oder nicht.

Generell kann die erfindungsgemäße Lichtschrankenanordnung auch nach dem Reflexionslichtschrankenprinzip arbeiten.

Mit der erfindungsmäßen Lichtschrankenanordnung wird eine hohe Störfestigkeit gegen Störeinstrahlungen und damit eine hohe Funktionssicherheit bei durchzuführenden Objektdetektionen erzielt.

Ein erster wesentlicher Aspekt der Erfindung besteht darin, dass mit der Sendemodulation eine Vielzahl unterschiedlicher Codierungen der Lichtstrahlen vorgegeben werden kann, wodurch eine sichere und deutliche Unterscheidung von vorhandenen Störlichtquellen, insbesondere auch von Lichtstrahlen benachbart angeordneter Lichtschrankenanordnungen ermöglicht wird.

Ein weiter wesentlicher Aspekt der Erfindung besteht darin, dass zur Auswertung der empfangenen Lichtstrahlen eine PLL (phase locked loop) eingesetzt wird, mit der die Codierungen der Lichtstrahlen besonders sicher und zuverlässig erkannt und damit von Störlicht unterschieden werden können. Die PLL bildet eine Phasenregelschleife, die typisch einen spannungsgesteuerten Oszillator aufweist, der sich ständig an die Frequenz eines Eingangssignals, das heißt der Sendemodulation der Lichtstrahlen anpasst. Mit dieser PLL kann die Sendemodulation der Lichtstrahlen, das heißt deren Codierung präzise erfasst werden.

Vorteilhaft ist eine digitale PLL vorgesehen.

Daran angepasst ist die PLL an einem digitalen Prozessor implementiert.

Der digitale Prozessor ist vorteilhaft Bestandteil der Auswerteeinheit. Die digitale PLL kann ohne zusätzlichen Hardwareaufwand in dem digitalen Prozessor implementiert sein, wobei besonders vorteilhaft die PLL von wenigstens einem Softwaremodul gebildet ist.

Gemäß einer vorteilhaften Ausführungsform bildet die erfindungsgemäße Lichtschrankenanordnung einen Sicherheitssensor. Der Sicherheitssensor kann in sicherheitstechnischen Applikationen, insbesondere im Bereich des Personenschutzes, eingesetzt werden. Ein typischer Anwendungsfall ist die Überwachung eines Gefahrenbereichs an einer gefahrbringenden Maschine. Der Betrieb der Maschine wird dann nur freigegeben, wenn mit der Lichtschrankenanordnung kein Objekt im Überwachungsbereich detektiert wird und wenn der Sicherheitssensor fehlerfrei arbeitet.

Die als Sicherheitssensor ausgebildete Lichtschrankenanordnung weist einen fehlersicheren Aufbau auf, was insbesondere durch eine redundante, mehrkanalige Auswerteeinheit erreicht wird, die beispielsweise zwei sich gegenseitig überwachende Rechnereinheiten aufweist. Wird mit der Auswerteeinheit ein Fehler aufgedeckt, geht der Sicherheitssensor in einen sicheren Zustand über, was insbesondere zum Abschalten der Maschine führt.

Besonders vorteilhaft besteht die Auswerteeinheit aus jeweils zwei sich gegenseitig überwachenden digitalen Prozessor, wobei in jedem digitalen Prozessor eine PLL zur Detektion der Sendemodulation der am Empfänger empfangenden Lichtstrahlen implementiert ist. Die Ergebnisse der PLL in den digitalen Prozessoren werden fortlaufend miteinander verglichen. Stimmen die Ergebnisse nicht überein, wird ein Fehler signalisiert, der den Sicherheitssensor in den sicheren Zustand überführt. Damit ist eine fehlersichere Detektion der Sendemodulation der Lichtstrahlen gewährleistet.

Erfindungsgemäß weist diese mehrere von einem Sender und einem Empfänger gebildete Strahlachsen auf. Den Lichtstrahlen aller Strahlachsen ist eine Codierung in Form einer Sendemodulation aufgeprägt. Die Codierungen der Lichtstrahlen werden in wenigstens einer PLL ermittelt.

Die Lichtschrankenanordnung bildet dann insbesondere einen Lichtvorhang.

Bei einer Lichtschrankenanordnung mit einer einkanaligen Auswerteeinheit, das heißt nur einem digitalen Prozessor ist somit nur eine PLL vorgesehen, die die Sendemodulationen aller Lichtstrahlen auswertet. Bei einer einen Sicherheitssensor bildenden Lichtschrankenanordnung ist eine redundante Auswerteeinheit mit zwei digitalen Prozessoren vorgesehen, wobei auf jedem digitalen Prozessor eine PLL implementiert ist, die die Sendemodulationen aller Lichtstrahlen auswertet. Die Ergebnisse der PLL werden fortlaufend miteinander verglichen.

Erfindungsgemäß sind in den oder jeden digitalen Prozessoren mehrere PLL vorgesehen, die Gruppen von Lichtstrahlen zugeordnet sind.

Alternativ ist in dem oder jedem digitalen Prozessor eine Anzahl der Strahlachsen entsprechende Anzahl von PLL vorgesehen, wobei den Lichtstrahlen einer Strahlachse jeweils eine PLL zugeordnet ist.

Bei einer Lichtschrankenanordnung mit mehreren Strahlachsen oder Gruppen von Lichtstrahlen werden vorteilhaft die Sender der Strahlachsen zyklisch einzeln nacheinander aktiviert. Eine einer Strahlachse oder Gruppe zugeordnete PLL ist nur dann aktiviert, wenn der Sender dieser Strahlachse aktiviert ist.

Damit wird ein an den Sendebetrieb der Lichtstrahlen optimiert angepasster getakteter Betrieb der PLL realisiert.

Diese Ausführungsform ist besonders vorteilhaft für Lichtschrankenanordnungen einsetzbar, bei welcher in jedem digitalen Prozessor eine PLL einer Strahlachse zugeordnet ist. Dann können die PLL, beziehungsweise die beiden auf den digitalen Prozessor implementierte PLL die einer Strahlachse zugeordnet sind, synchron mit dem Sendebetrieb des Senders der Strahlachse betrieben werden.

Die Sendemodulationen der Lichtstrahlen der Lichtschrankenanordnung können auf unterschiedliche Weise realisiert werden, so dass eine große Anzahl verschiedener Sendemodulationen und damit Codierungen zur Verfügung steht.

Gemäß einer ersten Variante sind die Lichtstrahlen einer Strahlachse mit einer Frequenz moduliert. Diese Sendemodulation ist zeitweise ausgesetzt. In der PLL wird das Vorhandensein der Frequenz der Sendemodulation ermittelt.

Gemäß einer zweiten Variante enthält die Sendemodulation der Lichtstrahlen Frequenzänderungen, welche als Codierungen in der PLL ermittelt werden.

Gemäß einer dritten Variante enthält die Sendemodulation der Lichtstrahlen Phasenänderungen, welche als Codierungen in das PLL ermittelt werden.

Diese Varianten können beliebig miteinander kombiniert werden, wodurch noch mehr unterschiedliche Codierungsverfahren realisiert werden können.

Die Erfindung wird im Folgenden anhand der Zeichnungen erläutert. Es zeigen:
- Figur 1:: Ausführungsbeispiel der erfindungsgemäßen Lichtschrankenanordnung in Form eines Lichtvorhangs.
- Figur 2:: Einzeldarstellung von Komponenten der Sendereinheit des Lichtvorhangs gemäß Figur 1.
- Figur 3:: Einzeldarstellung von Komponenten der Empfängereinheit des Lichtvorhangs gemäß Figur 1.
- Figur 4:: Erste Variante einer Sendemodulation für den Lichtvorhang gemäß Figur 1.
a) binäre Darstellung
b) Frequenzdarstellung
- Figur 5:: Zweite Variante einer Sendemodulation für den Lichtvorhang gemäß Figur 1.
a) binäre Darstellung
b) Frequenzdarstellung
- Figur 6:: Dritte Variante einer Sendemodulation für den Lichtvorhang gemäß Figur 1.
a) binäre Darstellung
b) Frequenzdarstellung
- Figur 7:: Darstellung einer PLL (phase locked loop) für den Lichtvorhang gemäß Figur 1.

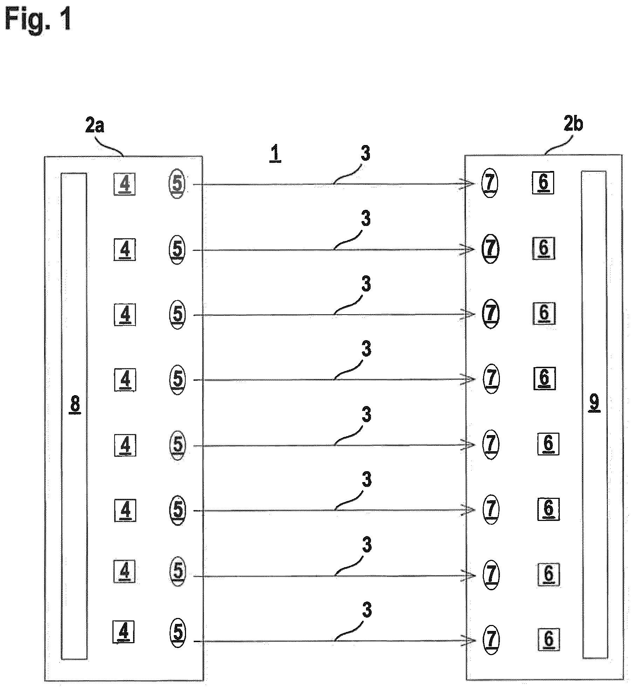

Figur 1 zeigt schematisch den Aufbau eines Ausführungsbeispiels der erfindungsgemäßen Lichtschrankenanordnung in Form eines Lichtvorhangs 1 zur Erfassung von Objekten innerhalb eines Überwachungsbereichs.

Der Lichtvorhang 1 weist eine Sendereinheit mit einem Gehäuse 2a mit einer Reihenanordnung von Lichtstrahlen 3 emittierenden Sendern 4 und diesen zugeordneten Optikelemente bildenden Sendeoptiken 5 auf. Weiterhin weist der Lichtvorhang 1 eine Empfängereinheit mit einem zweiten Gehäuse 2b mit einer Reihenanordnung von Lichtstrahlen 3 empfangenden Empfängern 6 auf, welchen jeweils ein Optikelement in Form einer Empfangsoptik 7 vorgeordnet ist.

Die Gehäuse 2a, 2b sind an gegenüberliegenden Rändern des Überwachungsbereichs so angeordnet, dass jeweils ein Empfänger 6 einem Sender 4 gegenüberliegend angeordnet ist und mit diesem ein Sender-Empfänger-Paar bildet, wobei die Lichtstrahlen 3 des Senders 4 eine Strahlachse bilden. Im vorliegenden Fall
sind acht Strahlachsen vorgesehen. Natürlich kann der Lichtvorhang 1 auch eine andere Zahl von Strahlachsen aufweisen.

Alternativ kann der Lichtvorhang 1 auch als Reflexions-Lichtvorhang 1 ausgebildet sein. Dann sind alle Sender 4 und Empfänger 6 in einem Gehäuse 2a oder 2b angeordnet, welche an einem Rand des Überwachungsbereichs angeordnet ist. Am anderen Ende befindet sich ein Reflektor. Bei freiem Überwachungsbereich werden die Lichtstrahlen 3 der Sender 4 über den Reflektor zurück zum jeweils zugeordneten Empfänger 6 geführt.

Die Sender 4 werden von einer Sendersteuerung 8 gesteuert. Den Empfängern 6 ist eine Auswerteeinheit 9 zugeordnet. Dabei werden die Strahlachsen zyklisch einzeln nacheinander aktiviert. Die Auswerteeinheit 9 bildet auch eine Empfängersteuerung, die die Empfänger 6 steuert und deren Empfangssignale zur Generierung eines Objektfeststellungssignals in Form eines binären Schaltsignals auswertet, dessen Schaltzustände angeben, ob sich ein Objekt im Überwachungsbereich befindet oder nicht. Bei freiem Überwachungsbereich gelangen die Lichtstrahlen 3 der Strahlachsen ungehindert zum Empfänger 6 der jeweiligen Strahlachse. Bei einem Objekteingriff wird wenigstens eine Strahlachse unterbrochen. Die Auswerteeinheit 9 kann einen mehrkanaligen Aufbau aufweisen, falls der Lichtvorhang 1 einen Sicherheitssensor bildet.

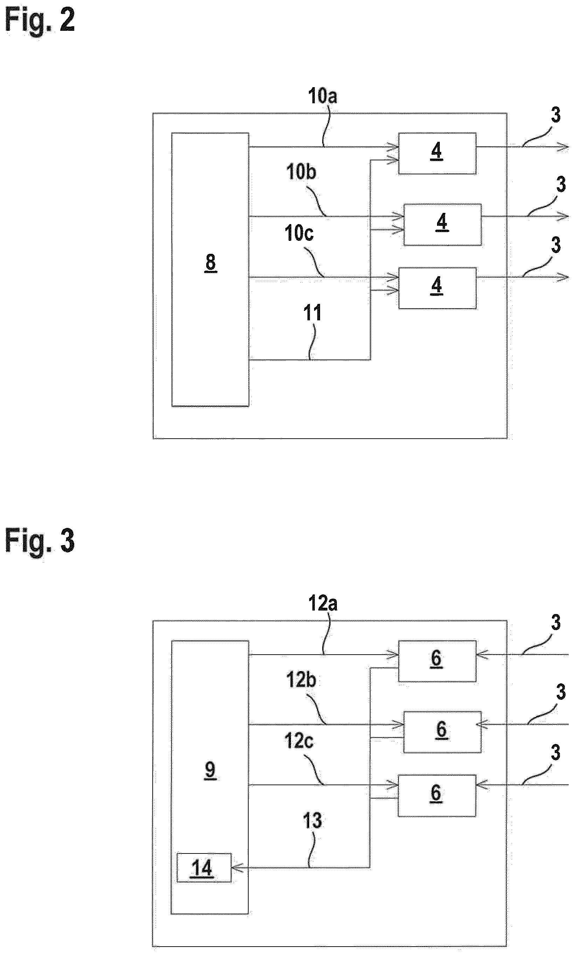

Figur 2 zeigt Komponenten der Sendereinheit mit der Sendersteuerung 8 und zugeordneten Sendern 4, wobei dort nur drei der Sender 4 dargestellt sind. Über Leitungen 10a - 10c führt die Sendersteuerung 8 den einzelnen Sendern 4 Auswahlsignale zu, mit denen die Sender 4 einzeln nacheinander aktiviert werden. Über die Leitung 11 erfolgt mittels der Sendersteuerung 8 eine Sendemodulation der Lichtstrahlen 3.

Figur 3 zeigt Komponenten der Empfängereinheit mit der die Empfängersteuerung bildenden Auswerteeinheiten 9 und zugeordneten Empfängern 6, wobei dort nur drei der Empfänger 6 dargestellt sind. Über Leitungen 12a - 12c führt die Auswerteeinheit 9 den einzelnen Empfängern 6 Auswahlsignale zu, mit denen die Empfänger 6 einzeln nacheinander aktiviert werden. Über die Leitung 13 werden Empfangssignale der Empfänger 6 der Auswerteeinheit 9 zugeführt.

Die Auswerteeinheit 9 gemäß Figur 3 besteht aus einem digitalen Prozessor, in dem als Softwaremodul eine digitale PLL 14 (phase locked loop) integriert ist, der die Empfangssignale zugeführt werden

Im vorliegenden Fall ist eine PLL 14 zur Auswertung der Empfangssignale aller Empfänger 6 vorgesehen, wobei diese synchron mit den Empfängern 6 aktiviert wird. Generell können auch mehrerer PLL 14 vorgesehen sein, die einzelnen Gruppen von Empfängern 6 zugeordnet sind. Weiterhin ist es auch möglich für jeden Empfänger 6 eine separate PLL 14 vorzusehen.

Für den Fall, dass der Lichtvorhang 1 ein Sicherheitssensor ist, weist dieser zwei sich zyklisch überwachende digitale Prozessoren auf. Dann sind in jedem digitalen Prozessor eine digitale PLL 14 integriert, wobei die Ergebnisse der PLL 14 oder parallelen PLLs fortlaufend für eine Fehlerkontrolle miteinander verglichen werden.

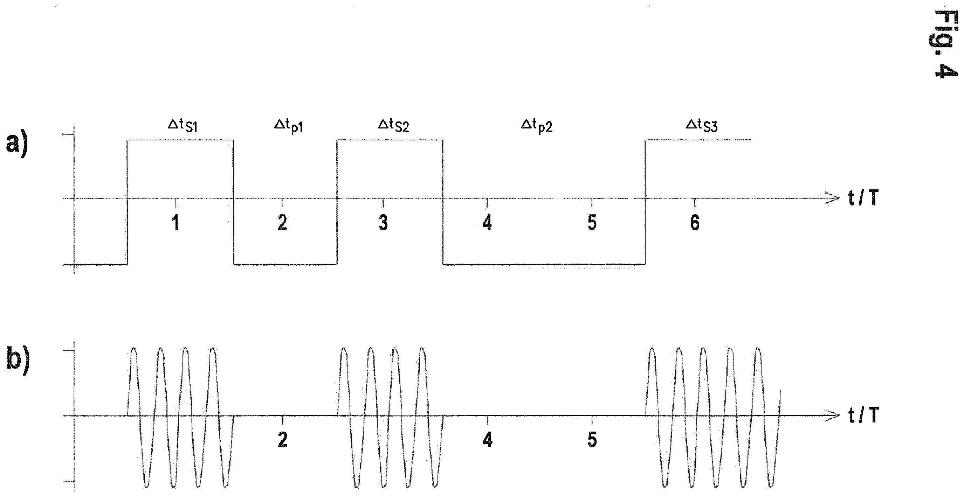

Die Figuren 4 - 6 zeigen unterschiedliche Ausprägungen von Sendemodulationen der Lichtstrahlen 3, die jeweils eine bestimmte Codierung bilden. Dabei stellen die Figuren 4 - 6 Zeitdiagramme dar, in denen der zeitliche Verlauf der jeweiligen Sendemodulation abhängig von der auf die Periodendauer T normierten Zeit t dargestellt ist. Dabei zeigen die Figuren 4b, 5b, 6b die zeitlichen Veränderungen der Frequenzen der Sendemodulationen und die Figuren 4a, 5a, 6a hierzu korrespondierende binäre Darstellungen.

Bei der Sendemodulation der Figuren 4a, 4b sind die Lichtstrahlen 3 in Modulationszeitintervallen Δtₛ₁, Δtₛ₂, Δtₛ₃ mit einer Frequenz moduliert. Diese Modulationsintervalle sind durch Pausenintervalle Δtₚ₁, Δtₚ₂, ... getrennt, in deren die Modulation mit der Modulationsfrequenz ausgesetzt wird. Die Modulationsintervalle Δtₛ₁, Δtₛ₂, Δtₛ₃ und die Pausenintervalle Δtₚ₁, Δtₚ₂ können prinzipiell gleich lang sein, müssen es aber nicht, wie die Figuren 4a, 4b zeigen.

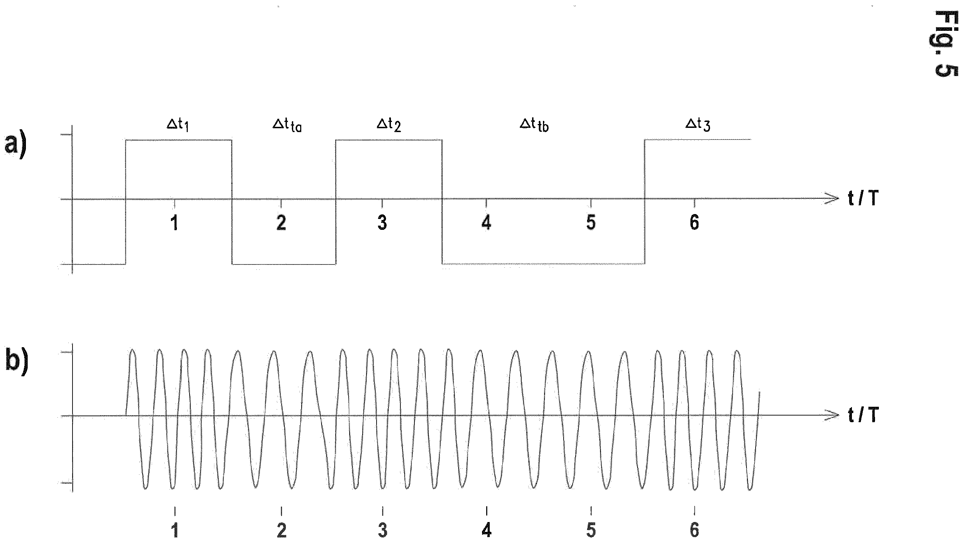

Bei der Sendemodulation gemäß den Figuren 5a, 5b sind die Lichtstrahlen 3 in Zeitintervallen Δt₁, Δt₂, Δt₃, ... mit einer ersten Frequenz moduliert und in Zeitintervallen Δtₐ, Δt_{b} mit einer zweiten Frequenz moduliert, so dass bei dem Übergang zwischen benachbarten Zeitintervallen eine Frequenzänderung auftritt.

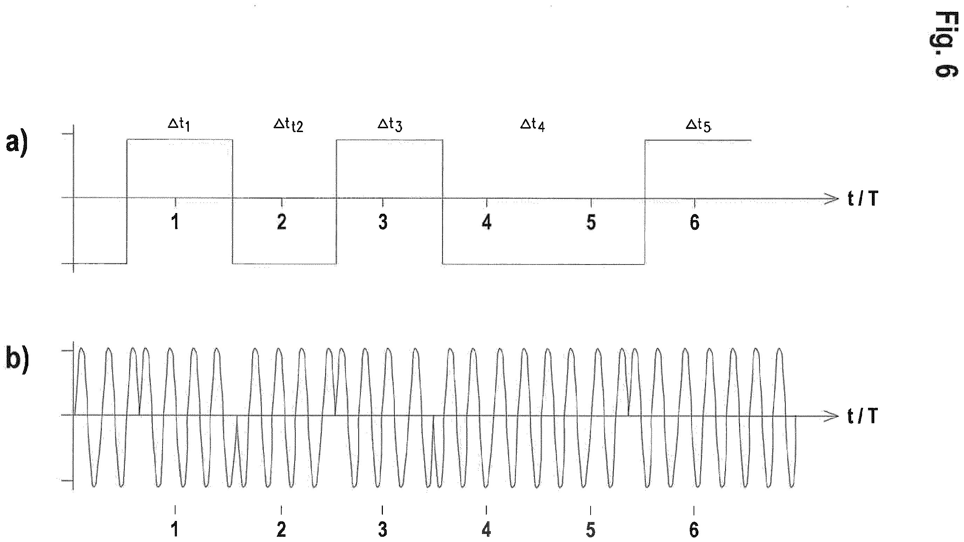

Bei der Sendemodulation gemäß den Figuren 6a, 6b sind Zeitintervalle Δt₁, Δt₂,...vorgesehen, bei welchen jeweils die Lichtstrahlen 3 mit derselben Frequenz moduliert sind. Zwischen benachbarten Zeitintervallen sind Phasensprünge vorhanden.

Generell können mit den Methoden der Figuren 4 - 6 oder Kombinationen hiervon der einzelnen Lichtstrahlen 3 des Lichtvorhangs unterschiedliche Sendemodulationen, das heißt Codierungen aufgeprägt werden.

Die Funktion des erfindungsgemäßen Lichtvorhangs ist derart, dass bei freiem Überwachungsbereich die Lichtstrahlen 3 der Sender 4 der einzelnen Strahlachsen auf den jeweils zugeordneten Empfänger 6 treffen. Die Zuordnung, dass ein Empfänger 6 die Lichtstrahlen 3 des Senders 4 der jeweiligen Strahlachse empfängt, wird erfindungsgemäß mit der PLL 14 derart überprüft, ob die Sendemodulation, das heißt Codierung der Lichtstrahlen 3 vom Sender 4 der zugeordneten Strahlachse stammt.

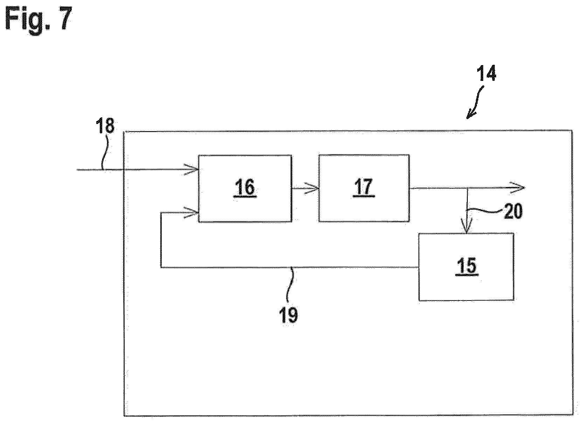

Ein Beispiel einer digitalen PLL 14 zeigt Figur 7. Die PLL 14 weist einen Frequenzgenerator 15, einen Phasenvergleicher 16 und eine Regelschleife 17 auf. Dem Phasenvergleicher wird über eine erste Leitung 18 das Empfangssignal des jeweiligen Empfängers 6 und über eine zweite Leitung 19 das Frequenzsignal des Frequenzgenerators 15 zugeführt, das auf die Frequenzen der Sendemodulation des Empfangssignals abgestimmt ist. Der Ausgang des Phasenvergleichers ist auf die Regelschleife 17 geführt. Das Ausgangssignal der Regelschleife 17 wird über eine Leitung 20 auf den Frequenzgenerator 15 rückgekoppelt.

Mit der so aufgebauten PLL 14 kann die Codierung der Lichtstrahlen 3 ermittelt werden. Am Ausgangssignal 20 der Regelschleife 17 kann abgelesen werden, ob die PLL 14 auf die Frequenz der Sendemodulation eingerastet ist. Durch die Übergänge zwischen den einzelnen Zeitintervallen bei den Sendemodulationen der Figuren 4 - 6 wird das Signal 20 entsprechend dem Vorhandensein der Frequenz, Frequenzänderungen oder Phasenveränderungen nachgeführt, wobei durch die entsprechenden Ausgangsgrößen der PLL 14 die jeweilige Sendemodulation die in einer Folge von Übergängen der Sendemodulation der Figuren 4a, 4b einer Folge von Frequenzänderungen (Figuren 5a, 5b) oder einer Folge von Phasenänderungen (Figuren 6a, 6b) vorhanden ist, ermittelt wird. Die PLL kann mit analogen, digitalen Elementen aufgebaut sein oder komplett in der Software eines Controllers realisiert sein.

### Bezugszeichenliste

- (1): Lichtvorhang
- (2a): Gehäuse
- (2b): Gehäuse
- (3): Lichtstrahl
- (4): Sender
- (5): Sendeoptik
- (6): Empfänger
- (7): Empfangsoptik
- (8): Sendersteuerung
- (9): Auswerteeinheit
- (10 a-c): Leitung
- (11): Leitung
- (12 a-c): Leitung
- (13): Leitung
- (14): PLL (phase locked loop)
- (15): Frequenzgenerator
- (16): Phasenvergleicher
- (17): Regelschleife
- (18): Leitung
- (19): Leitung
- (20): Leitung

## Patentansprüche

1. Lichtschrankenanordnung zur Erfassung von Objekten in einem Überwachungsbereich mit wenigstens einem Lichtstrahlen (3) emittierenden Sender (4) und einem zugeordneten Empfänger (6), der mit dem Sender (4) eine Strahlenachse bildet, wobei bei freiem Überwachungsbereich die Lichtstrahlen (3) auf den Empfänger (6) geführt sind und wobei bei einem Objekteingriff im Überwachungsbereich der Strahlengang der Lichtstrahlen (3) zumindest teilweise unterbrochen ist, und mit einer Auswerteeinheit (9), in welcher abhängig von Empfangssignalen des Empfängers (6) ein Objektfeststellungssignal generiert wird, wobei den Lichtstrahlen (3) eine Codierung in Form einer Sendemodulation aufgeprägt ist,
**dadurch gekennzeichnet dass**
die Auswerteeinheit (9) eine digitale PLL (14) aufweist, in welcher die Codierung der Lichtstrahlen (3) ermittelt wird, dass diese mehrere von einem Sender (4) und einem Empfänger (6) gebildete Strahlachsen aufweist, wobei den Lichtstrahlen (3) aller Strahlachsen eine Codierung in Form einer Sendemodulation aufgeprägt ist, und die Codierungen der Lichtstrahlen (3) in wenigsten einer digitalen PLL (14) ermittelt werden, und dass in dem oder jedem digitalen Prozessor mehrere PLL (14) vorgesehen sind, die Gruppen von Lichtstrahlen (3) zugeordnet sind, oder dass in dem oder jedem digitalen Prozessor eine Anzahl der Strahlachsen entsprechende Anzahl von PLL (14) vorgesehen ist, wobei den Lichtstrahlen (3) einer Strahlachse jeweils eine PLL (14) zugeordnet ist.

2. Lichtschrankenanordnung nach Anspruch 1, **dadurch gekennzeichnet, dass** die PLL (14) in einem digitalen Prozessor implementiert ist.

3. Lichtschrankenanordnung nach einem der Ansprüche 1 oder 2, **dadurch gekennzeichnet, dass** die PLL (14) von wenigstens einem Softwaremodul gebildet ist.

4. Lichtschrankenanordnung nach einem der Ansprüche 1 bis 3, **dadurch gekennzeichnet, dass** diese ein Sicherheitssensor ist.

5. Lichtschrankenanordnung nach Anspruch 4, **dadurch gekennzeichnet, dass** dessen Auswerteeinheit (9) zwei sich gegenseitig überwachende digitale Prozessoren aufweist.

6. Lichtschrankenanordnung nach Anspruch 5, **dadurch gekennzeichnet, dass** in jedem digitalen Prozessor eine PLL (14) vorgesehen ist, die zur Ermittlung der Codierung dienen, wobei die Ergebnisse der PLL (14) miteinander verglichen werden.

7. Lichtschrankenanordnung nach einem der Ansprüche 1 bis 6, **dadurch gekennzeichnet, dass** diese ein Lichtvorhang ist.

8. Lichtschrankenanordnung nach einem der Ansprüche 1 bis 7, **dadurch gekennzeichnet, dass** die Sender (4) der Strahlachsen zyklisch einzeln nacheinander aktiviert werden, und dass eine einer Strahlachse zugeordnete PLL (14) nur dann aktiviert ist, wenn der Sender (4) dieser Strahlachse aktiviert ist.

9. Lichtschrankenanordnung nach einem der Ansprüche 1 bis 8, **dadurch gekennzeichnet, dass** die Lichtstrahlen (3) einer Strahlachse mit einer Frequenz moduliert sind, wobei diese Sendemodulation zeitweise ausgesetzt ist, und dass in der PLL (14) das Vorhandensein der Frequenz der Sendemodulation ermittelt wird.

10. Lichtschrankenanordnung nach einem der Ansprüche 1 bis 9, **dadurch gekennzeichnet, dass** die Sendemodulation der Lichtstrahlen (3) Frequenzänderungen enthält, welche als Codierungen in derPLL (14) ermittelt werden.

11. Lichtschrankenanordnung nach einem der Ansprüche 1 bis 10, **dadurch gekennzeichnet, dass** die Sendermodulation der Lichtstrahlen (3) Phasenänderungen enthält, welche als Codierungen in der PLL (14) ermittelt werden.

## Claims

1. A light barrier arrangement for detecting objects in a monitoring area with at least one transmitter (4) emitting light beams (3) and an associated receiver (6) which forms a beam axis with the transmitter (4), wherein the light beams (3) are guided to the receiver (6) when the monitoring area is free and wherein the beam path of the light beams (3) is at least partially interrupted when an object enters the monitoring area, and with an evaluation unit (9) in which an object detection signal is generated as a function of received signals from the receiver (6), wherein a coding in the form of a transmission modulation is impressed on the light beams (3),
**characterised in that** the evaluation unit (9) has a digital PLL (14), in which the coding of the light beams (3) is determined, **in that** this has a plurality of beam axes formed by a transmitter (4) and a receiver (6), the light beams (3) of all beam axes being imprinted with a coding in the form of a transmission modulation, and the codes of the light beams (3) are determined in at least one digital PLL (14), and **in that** a plurality of PLLs (14) are provided in the or each digital processor, which are assigned to groups of light beams (3), or **in that** a number of PLLs (14) corresponding to the number of beam axes is provided in the or each digital processor, wherein a respective PLL (14) is assigned to the light beams (3) of a beam axis.

2. A light barrier arrangement according to claim 1, **characterised in that** the PLL (14) is implemented in a digital processor.

3. A light barrier arrangement according to one of claims 1 or 2, **characterised in that** the PLL (14) is formed by at least one software module.

4. A light barrier arrangement according to one of claims 1 to 3, **characterised in that** this is a safety sensor.

5. A light barrier arrangement according to claim 4, **characterised in that** its evaluation unit (9) has two mutually monitoring digital processors.

6. A light barrier arrangement according to claim 5, **characterised in that** a PLL (14) is provided in each digital processor, which is used to determine the coding, the results of the PLL (14) being compared with one another.

7. A light barrier arrangement according to one of claims 1 to 6, **characterised in that** this is a light curtain.

8. A light barrier arrangement according to one of claims 1 to 7, **characterised in that** the transmitters (4) of the beam axes are activated cyclically one after the other, and **in that** a PLL (14) assigned to a beam axis is only activated when the transmitter (4) of this beam axis is activated.

9. A light barrier arrangement according to one of claims 1 to 8, **characterised in that** the light beams (3) of a beam axis are modulated with a frequency, this transmission modulation being temporarily suspended, and **in that** the presence of the frequency of the transmission modulation is determined in the PLL (14).

10. A light barrier arrangement according to one of claims 1 to 9, **characterised in that** the transmission modulation of the light beams (3) contains frequency changes which are determined as codes in the PLL (14).

11. A light barrier arrangement according to one of claims 1 to 10, **characterised in that** the transmitter modulation of the light beams (3) contains phase changes which are determined as codes in the PLL (14).

## Revendications

1. Ensemble barrière lumineuse permettant la détection d'objets dans une zone de surveillance, comprenant au moins un émetteur (4) émettant des faisceaux lumineux (3) et un récepteur associé (6) qui forme un axe de faisceau avec l'émetteur (4), dans lequel les faisceaux lumineux (3) sont guidés vers le récepteur (6) lorsque la zone de surveillance est libre et dans lequel le trajet des faisceaux lumineux (3) est au moins partiellement interrompu lorsqu'un objet pénètre dans la zone de surveillance, et une unité d'évaluation (9) dans laquelle un signal de détection d'objet est généré en fonction des signaux reçus du récepteur (6), dans laquelle un codage sous la forme d'une modulation de transmission est imprimé sur les faisceaux lumineux (3),
**caractérisé en ce que** l'unité d'évaluation (9) possède une PLL numérique (14), dans laquelle le codage des faisceaux lumineux (3) est déterminé, **en ce que** celle-ci possède une pluralité d'axes de faisceaux formés par un émetteur (4) et un récepteur (6), les faisceaux lumineux (3) de tous les axes de faisceaux étant imprimés avec un codage sous la forme d'une modulation de transmission, et les codes des faisceaux lumineux (3) sont déterminés dans au moins une PLL numérique (14), et **en ce que** plusieurs PLL (14) sont prévues dans ledit ou chaque processeur numérique, qui sont affectés à des groupes de faisceaux lumineux (3), ou **en ce qu'**un certain nombre de PLL (14) correspondant au nombre d'axes de faisceaux est prévu dans ledit ou chaque processeur numérique, dans lequel une PLL (14) respective est affectée aux faisceaux lumineux (3) d'un axe de faisceaux.

2. Ensemble barrière lumineuse selon la revendication 1, **caractérisé en ce que** la PLL (14) est mise en oeuvre dans un processeur numérique.

3. Ensemble barrière lumineuse selon l'une des revendications 1 ou 2, **caractérisé en ce que** la PLL (14) est constituée d'au moins un module logiciel.

4. Ensemble barrière lumineuse selon l'une des revendications 1 à 3, **caractérisé en ce qu'**il s'agit d'un capteur de sécurité.

5. Ensemble barrière lumineuse selon la revendication 4, **caractérisé en ce que** son unité d'évaluation (9) comporte deux processeurs numériques se surveillant mutuellement.

6. Ensemble barrière lumineuse selon la revendication 5, **caractérisé en ce qu'**une PLL (14) est prévue dans chaque processeur numérique, pour déterminer le codage, les résultats de la PLL (14) étant comparés l'un à l'autre.

7. Ensemble barrière lumineuse selon l'une des revendications 1 à 6, **caractérisé en ce qu'**il s'agit d'une barrière lumineuse.

8. Ensemble barrière lumineuse selon l'une des revendications 1 à 7, **caractérisé en ce que** les émetteurs (4) des axes de rayons sont activés cycliquement l'un après l'autre, et **en ce qu'**une PLL (14) affectée à un axe de rayons n'est activée que lorsque l'émetteur (4) de cet axe de rayons est activé.

9. Ensemble barrière lumineuse selon l'une des revendications 1 à 8, **caractérisé en ce que** les faisceaux lumineux (3) d'un axe de faisceau sont modulés avec une fréquence, cette modulation de transmission étant temporairement suspendue, et **en ce que** la présence de la fréquence de la modulation de transmission est déterminée dans la PLL (14).

10. Ensemble barrière lumineuse selon l'une des revendications 1 à 9, **caractérisé en ce que** la modulation de transmission des faisceaux lumineux (3) contient des changements de fréquence qui sont déterminés en tant que codes dans la PLL (14).

11. Ensemble barrière lumineuse selon l'une des revendications 1 à 10, **caractérisé en ce que** la modulation de transmission des faisceaux lumineux (3) contient des changements de phase qui sont déterminés en tant que codes dans la PLL (14).
